# EUROPÄISCHE PATENTSCHRIFT

(11) **EP 3 628 576 B1**
(45) Veröffentlichungstag und Bekanntmachung des Hinweises auf die Patenterteilung: **28.06.2023**
(21) Anmeldenummer: 19199223.9
(22) Anmeldetag: 24.09.2019
(51) Int. Cl.: B62M 6/45, B62M 6/55, B62H 5/10, B62H 5/18, B62H 5/20, B62M 11/14, F16H 3/72, F16H 37/08

(54) **ANTRIEBSVORRICHTUNG FÜR EIN ELEKTROFAHRRAD MIT ELEKTRONISCHER DIEBSTAHLSCHUTZEINRICHTUNG UND STEUERUNGSVERFAHREN**
DRIVE DEVICE FOR AN ELECTRIC BICYCLE WITH ELECTRONIC ANTI-THEFT DEVICE AND CONTROL METHOD
DISPOSITIF D'ENTRAÎNEMENT POUR UNE BICYCLETTE ÉLECTRIQUE POURVU D'UN AGENCEMENT ÉLECTRONIQUE DE PROTECTION CONTRE LE VOL ET PROCÉDÉ DE COMMANDE

(30) Priorität: 25.09.2018 DE 102018216340
(43) Veröffentlichungstag der Anmeldung: 01.04.2020
(73) Patentinhaber: Brose Antriebstechnik GmbH & Co. Kommanditgesellschaft, Berlin, 10553 Berlin (DE)
(72) Erfinder: WEIGEL, Christfried, 13599 Berlin (DE)
(74) Vertreter: Maikowski & Ninnemann Patentanwälte Partnerschaft mbB

(56) Entgegenhaltungen:
- EP-B1- 2 218 634
- DE-A1-102012 217 775
- DE-A1-102014 109 000
- US-A1- 2012 146 429

## Beschreibung

Die vorgeschlagene Lösung betrifft insbesondere eine Antriebsvorrichtung für ein Elektrofahrrad.

Es ist bekannt, an einem Elektrofahrrad, mithin an einem sogenannten E-Bike oder Pedelec, zwei Elektromotoren in Kombination mit einem Überlagerungsgetriebe einzusetzen, um ein Übersetzungsverhältnis zwischen Antrieb und Abtrieb stufenlos einzustellen. Eine solche Antriebsvorrichtung weist hierbei zum einen eine Tretlagerwelle auf, über die ein von einem Fahrer des Elektrofahrrads erzeugtes Antriebsdrehmoment eingeleitet werden kann und an der hierfür Pedale vorgesehen sind. Über eine mit einem Rad des Elektrofahrrads zu koppelnde Abtriebswelle der Antriebsvorrichtung wird dann ein an der Tretlagerwelle eingeleitetes Antriebsdrehmoment und/oder ein elektromotorisch erzeugtes Drehmoment an ein Rad, üblicherweise ein Hinterrad des Elektrofahrrads, übertragen. Über das Überlagerungsgetriebe sind die Tretlagerwelle und die Abtriebswelle miteinander gekoppelt, wobei ein von einem ersten Elektromotor der zwei Elektromotoren erzeugtes Drehmoment zumindest teilweise an die Abtriebswelle übertragbar ist. Über den zweiten Elektromotor der zwei Elektromotoren ist ein Übersetzungsverhältnis stufenlos einstellbar, sodass das Elektrofahrrad über ein Antriebsdrehmoments des ersten Elektromotors beschleunigbar ist, ohne dass hierfür an der Tretlagerwelle schneller oder mit größerer Kraft gedreht werden müsste. Der zweite Elektromotor dient derart auch der Abstützung des von dem ersten Elektromotor erzeugten Drehmoments und kann hierfür je nach Übersetzungsverhältnis eine Rotorwelle in unterschiedliche Drehrichtungen drehen. Eine Antriebsvorrichtung für ein Elektrofahrrad mit einem vergleichbaren Überlagerungsgetriebe und zwei Elektromotoren ist hierbei beispielsweise aus dem gattungsgemäßen Dokument EP 2 218 634 B1 bekannt.

Aus der DE 10 2011 006 444 A1 ist ferner eine Diebstahlsicherung bekannt, die insbesondere bei Elektrofahrrädern zum Einsatz kommen kann und die sich darauf fokussiert, dass einzelne Komponenten des Elektrofahrrads mit einer individualisierenden, gleichzeitig aber genau dem einen Elektrofahrrad zugeordneten Kennung versehen werden, um ein missbräuchliches Entfernen dieser Komponenten und insbesondere das Zerlegen des Elektrofahrrads in seine Einzelteile für einen Dieb unattraktiv zu machen. Hierbei ist in der DE 10 2011 006 444 A1 auch angedacht, Funktionen der einzelnen (elektronischen) Komponenten zu sperren, sofern die Kennungen der verwendeten Komponenten nicht zueinander passen. Weitere Möglichkeiten zur Diebstahlsicherung sind beispielsweise aus der DE 10 2012 217 775 A1, der DE 10 2014 109 000 A1 und der US 2012/146429 A1 bekannt.

Praktisch besteht jedoch weiterhin das Problem, dass gerade hochpreisige Elektrofahrräder regelmäßig nur mittels aufwendiger mechanischer Schlösser vor einem Diebstahl geschützt werden können. Hierbei können selbst vergleichsweise schwere und komplexe Schlösser nicht selten einen Diebstahl des Elektrofahrrads nicht verhindern. Nach Aufbrechen des Schlosses ist das Elektrofahrrad dann auch üblicherweise uneingeschränkt nutzbar.

Der vorgeschlagenen Lösung liegt daher die Aufgabe zugrunde, in dieser Hinsicht einen verbesserten Diebstahlschutz für ein Elektrofahrrad bereitzustellen, insbesondere für Elektrofahrrad mit einem Antrieb, der ein Überlagerungsgetriebe mit zwei Elektromotoren umfasst.

Diese Aufgabe ist sowohl mit einer Antriebsvorrichtung nach Anspruch 1 als auch mit einem Steuerungsverfahren nach Anspruch 7 gelöst.

Hiernach ist eine Antriebsvorrichtung für ein Elektrofahrrad vorgeschlagen, die neben einer Tretlagerwelle eine mit einem Rad des Elektrofahrrads zu koppelnde Abtriebswelle zum Antreiben des Rades des Elektrofahrrads und ein Überlagerungsgetriebe umfasst.

Über das Überlagerungsgetriebe sind die Tretlagerwelle und die Abtriebswelle miteinander (drehmomentübertragend) gekoppelt, wobei das Übersetzungsverhältnis des Überlagerungsgetriebes mithilfe zweier Elektromotoren stufenlos einstellbar ist, von denen ein erster Elektromotor ein Drehmoment erzeugt, dass zumindest teilweise an die Abtriebswelle übertragbar ist, um hierüber das Elektrofahrrad zu beschleunigen. Die vorgeschlagene Antriebsvorrichtung umfasst ferner eine elektronische Diebstahlschutzeinrichtung, über die mindestens einer der Elektromotoren in einem Betriebszustand betreibbar ist, in dem ein elektromotorisch erzeugtes Drehmoment einer Drehung der Tretlagerwelle in eine Vorwärtsdrehrichtung entgegenwirkt.

Die Vorwärtsdrehrichtung entspricht hierbei der Drehrichtung der Tretlagerwelle, um über die Tretlagerwelle eine vor einem Fahrer des Elektrofahrrads aufgebrachte Antriebskraft in eine Vorwärtsbewegung des Elektrofahrrads umzusetzen. Bei nicht vorhandener oder nicht aktivierter elektronischer Diebstahlschutzeinrichtung würde folglich eine derartige Drehung der Tretlagerwelle zu einem gegebenenfalls elektromotorisch verstärkten Abtriebsdrehmoment an der Abtriebswelle führen, sodass hierüber ein mit der Abtriebswelle gekoppeltes und von der Abtriebswelle angetriebenes Kraftübertragungsglied, wie zum Beispiel eine Kette oder ein Riemen, insbesondere ein Zahnriemen, ein mit dem anzutreibenden Rad drehfest verbundenes Koppelteil, wie zum Beispiel ein Kettenrad oder eine Zahnriemenscheibe, in Drehung versetzt. Über die elektronische Diebstahlschutzeinrichtung wird einem solchen Antriebsdrehmoment an der Tretlagerwelle ein entgegenwirkendes elektromotorisch erzeugtes Drehmoment entgegengesetzt, sodass kein Drehmoment (mehr) an der Abtriebswelle zur Verfügung steht oder allenfalls eine derart kleines Abtriebsdrehmoment, dass hierüber das Elektrofahrrad nur mit einer vorgegebenen Geschwindigkeit unter 3 km/h, insbesondere unter 2 km/h oder sogar nur unter 1 km/h antreibbar ist. Bei aktivierter elektronischer Diebstahlschutzeinrichtung ist somit das Elektrofahrrad für einen Dieb nicht zu beschleunigen und damit nicht ohne Weiteres nutzbar oder veräußerbar.

Die Antriebsvorrichtung umfasst eine Steuerelektronik, die konfiguriert ist, bei aktivierter Diebstahlschutzeinrichtung in Reaktion auf eine elektronisch erfasste Drehung der Tretlagerwelle in die Vorwärtsdrehrichtung mindestens einen der Elektromotoren zur Erzeugung des entgegenwirkenden Drehmoments anzusteuern. Ist folglich die Diebstahlschutzeinrichtung aktiviert, führt die Drehung der Tretlagerwelle unmittelbar oder zumindest nach einer vorgegebenen Zeit zur Erzeugung eines entgegenwirkenden Drehmoments im Antrieb des Elektrofahrrads, sodass das Elektrofahrrad nicht bestimmungsgemäß genutzt werden kann. Die Antriebsvorrichtung und der hiermit bereitgestellte Antrieb des Elektrofahrrads werden somit über die elektronische Diebstahlschutzeinrichtung in sich verspannt, wenn die Tretlagerwelle (bei aktivierter Diebstahlschutzeinrichtung) im Vorwärtsdrehrichtung gedreht wird.

Die Steuerelektronik ist konfiguriert, bei aktivierter Diebstahlschutzeinrichtung den mindestens einen Elektromotor zur Erzeugung des entgegenwirkenden Drehmoments erst anzusteuern, nachdem elektronisch detektiert wurde, dass die Tretlagerwelle um mindestens eine hinterlegte Mindestanzahl an Umdrehungen gedreht wurde oder (seit einer detektierten Drehung der zunächst ruhenden Tretlagerwelle) eine definierte Überwachungszeitdauer verstrichen ist. In den vorstehend skizzierten Konstellationen wird somit jeweils erst dann ein entgegenwirkendes Drehmoment elektromotorisch erzeugt, wenn bei aktivierter Diebstahlschutzeinrichtung zumindest ein weiteres Kriterium erfüllt ist. So kann beispielsweise die Erzeugung des entgegenwirkenden Drehmoments davon abhängen, dass die Tretlagerstelle mit einer gewissen Geschwindigkeit oder Frequenz gedreht wird und/oder bereits für eine hinterlegte Überwachungszeitdauer gedreht wird, ohne dass die Diebstahlschutzeinrichtung deaktiviert worden wäre.

Wenn ein entgegenwirkendes Drehmoment elektromotorisch erst dann erzeugt wird, wenn eine Drehgeschwindigkeit der Tretlagerwelle einen Schwellwert überschreitet, kann z.B. eine Konfiguration ermöglichen, bei der das Elektrofahrrad auch bei aktivierter Diebstahlschutzeinrichtung noch in einem Notbetrieb nutzbar ist. In diesem Notbetrieb kann beispielsweise das Elektrofahrrad im Reparaturfall oder bei einer etwaigen Fehlfunktion noch in eine Fachwerkstatt gefahren werden, dann jedoch gleichwohl nur mit einer deutlich reduzierten Geschwindigkeit, da ab einer bestimmten Drehgeschwindigkeit der Tretlagerstelle jeweils die Diebstahlschutzeinrichtung eine stärkere Beschleunigung des Elektrofahrrads blockiert.

Alternativ oder ergänzend ist vorgesehen, dass die Diebstahlschutzeinrichtung eingerichtet und konfiguriert ist, einen autorisierten Benutzer elektronisch zu identifizieren, und in Reaktion auf die Authentifizierung eines autorisierten Benutzers deaktivierbar ist. Die Diebstahlschutzeinrichtung ist bei einer derartigen Ausführungsvariante folglich nicht oder nicht nur mechanisch aktivierbar und/oder deaktivierbar. Vielmehr ist eine elektronische Authentifizierung vorgesehen, um eine Nutzung des Elektrofahrrads nur einem autorisierten Benutzer zu gestatten. Die Steuerelektronik ist dabei konfiguriert, bei aktivierter Diebstahlschutzeinrichtung den mindestens einen Elektromotor zur Erzeugung des entgegenwirkende Drehmoments erst anzusteuern, nachdem innerhalb einer vorgegebenen Zeitdauer nach elektronischer Detektion einer Bewegung des Elektrofahrrads kein autorisierter Benutzer authentifiziert wurde. Die Diebstahlschutzeinrichtung ist hierfür beispielsweise mit einem Zeitgeber respektive Timer ausgestattet, der nach elektronischer Detektion einer Bewegung des Elektrofahrrads automatisch gestartet wird. Die elektronische Detektion einer Bewegung Elektrofahrrads erfolgt hierbei beispielsweise über eine sensorische Erfassung einer Drehung mindestens eines Rades des Elektrofahrrads und/oder über eine sensorische Überwachung einer drehenden Komponente der Antriebsvorrichtung, zum Beispiel eines Zahnrades oder einer Welle der Antriebsvorrichtung. Ist nach einer elektronischen Detektion einer Bewegung des Elektrofahrrads bei aktivierter Diebstahlschutzeinrichtung innerhalb der vorgegebenen Zeitdauer, zum Beispiel weniger als 10 oder 5 Sekunden, keine Authentifizierung des autorisierten Benutzers erfolgt, wird mindestens einer der Elektromotoren der Antriebsvorrichtung zur Erzeugung des entgegenwirkenden Drehmoments angesteuert und damit der Antrieb des Elektrofahrrads unbrauchbar geschaltet.

In diesem Zusammenhang kann beispielsweise vorgesehen sein, dass sich der autorisierter Benutzer durch Eingabe eines Codes, zum Beispiel eines Passworts oder einer PIN und/oder über biometrische Charakteristika des Benutzers, wie zum Beispiel einen Fingerabdruck oder mithilfe einer Gesichtserkennung, gegenüber der Diebstahlschutzeinrichtung elektronisch identifizieren kann. Hierfür kann die Diebstahlschutzeinrichtung der Antriebsvorrichtung beispielsweise ein an dem Elektrofahrrad vorzusehendes Bedienteil aufweisen, über das sich der Benutzer gegenüber der Diebstahlschutzeinrichtung authentifizieren kann. Alternativ oder ergänzend kann die Diebstahlschutzeinrichtung mit einem biometrischen Authentifizierungssystem ausgestattet oder hiermit gekoppelt, insbesondere drahtlos gekoppelt sein, um eine biometrische Authentifizierung eines autorisierten Benutzers zur Deaktivierung der Diebstahlschutzeinrichtung zu ermöglichen.

Beispielsweise umfasst die Diebstahlschutzeinrichtung ein mobiles Sendegerät oder die Diebstahlschutzeinrichtung ist mit einem mobilen Sendegerät, zum Beispiel in Form eines Mobilgeräts, insbesondere in Form eines Smartphone, koppelbar. An einem mobilen Sendegerät kann sich hierbei ein autorisierter Benutzer authentifizieren, wobei das mobile Sendegerät dann z.B. konfiguriert ist, kabellos eine Deaktivierungssignal an die Diebstahlschutzeinrichtung zu senden, wenn ein autorisierter Benutzer erfolgreich authentifiziert werden konnte. Die Diebstahlschutzeinrichtung umfasst folglich in einer solchen Ausführungsvariante beispielsweise einen Empfänger für den drahtlosen Empfang eines Deaktivierungssignals von Seiten des mobilen Sendegeräts, wenn hierüber ein autorisierter Benutzer erfolgreich authentifiziert werden konnte.

Gegebenenfalls umfasst die Diebstahlschutzeinrichtung einen Sender für das Senden eines Statussignals an ein (entferntes) mobiles Sendegerät oder einen anderen, zum Beispiel dem autorisierten Benutzer zugeordneten, Empfänger, um über Aktivierung und/oder Deaktivierung der Diebstahlschutzeinrichtung kabellos zu informieren. Die Diebstahlschutzeinrichtung der Antriebsvorrichtung kann somit beispielsweise konfiguriert sein, ein Statussignal an ein Smartphone eines autorisierten Benutzers zu senden, um hierüber zu signalisieren, dass die Diebstahlschutzeinrichtung erfolgreich aktiviert und/oder erfolgreich deaktiviert wurde. Derart erhält der autorisierte Benutzer unmittelbar eine Information darüber, dass sein Elektrofahrrad durch eine Deaktivierung der Diebstahlschutzeinrichtung entriegelt wurde. Befindet sich der autorisierte Benutzer zum Zeitpunkt des Erhalts einer entsprechenden Nachricht nicht an seinem Elektrofahrrad, spricht dies dann beispielsweise dafür, dass gerade ein Diebstahlversuch erfolgt.

Ein Sender der Diebstahlschutzeinrichtung kann ferner dazu dienen, ein Standortsignal zum aktuellen Standort des Elektrofahrrads auszusenden, insbesondere an ein mobiles Sendegerät des autorisierten Benutzers oder einen zentralen Server, um jeweils über den aktuellen Standort des Elektrofahrrads zu informieren. Beispielsweise enthält dann ein solches Standortsignal GPS-Daten.

Gegebenenfalls kann selbstverständlich in einer möglichen Weiterbildung die Steuerelektronik dann auch konfiguriert sein, bei aktivierter Diebstahlschutzeinrichtung den mindestens einen Elektromotor zur Erzeugung des entgegenwirkende Drehmoments erst anzusteuern, nachdem elektronisch detektiert wurde, dass einerseits die Tretlagerwelle um die mindestens eine hinterlegte Mindestanzahl an Umdrehungen gedreht wurde oder (seit einer detektierten Drehung der zunächst ruhenden Tretlagerwelle) die definierte Überwachungszeitdauer verstrichen ist und andererseits innerhalb der vorgegebenen Zeitdauer nach elektronischer Detektion der Bewegung des Elektrofahrrads kein autorisierter Benutzer authentifiziert wurde. Die Erzeugung eines entgegenwirkenden Drehmoments über die aktivierte Diebstahlschutzeinrichtung hängt hier folglich vom Vorliegen mehrerer (mindestens zweier) Kriterien ab. Dies kann gegebenenfalls der Erhöhung eines Bedienkomforts für einen autorisierten Benutzer des Elektrofahrrads dienen.

Die vorgeschlagene Lösung betrifft des Weiteren auch ein Verfahren zur Steuerung einer Antriebsvorrichtung eines Elektrofahrrads.

Bei der zu steuernden Antriebsvorrichtung sind eine Tretlagerwelle und eine mit einem Rad des Elektrofahrrads gekoppelte Abtriebswelle über ein Überlagerungsgetriebe miteinander gekoppelt. Ein Übersetzungsverhältnis des Überlagerungsgetriebes ist mithilfe zweier Elektromotoren der Antriebvorrichtung stufenlos einstellbar und ein von einem ersten Elektromotor der zwei Elektromotoren erzeugtes Drehmoment ist zumindest teilweise an die Abtriebswelle übertragbar. Im Rahmen des vorgeschlagenen Steuerungsverfahrens ist ferner vorgesehen, dass über eine elektronische Diebstahlschutzeinrichtung mindestens einer der Elektromotoren in einem Betriebszustand betrieben wird, in dem ein elektromotorisch erzeugtes Drehmoment einer Drehung der Tretlagerstelle in eine Vorwärtsdrehrichtung entgegenwirkt, wenn die elektronische Diebstahlschutzeinrichtung aktiviert ist.

Die Antriebsvorrichtung umfasst ferner eine Steuerelektronik, die, bei aktivierter Diebstahlschutzeinrichtung, in Reaktion auf eine elektronisch erfasste Drehung der Tretlagerwelle in die Vorwärtsdrehrichtung den mindestens einen Elektromotor zur Erzeugung des entgegenwirkenden Drehmoments ansteuert. Gemäß einer ersten Variante steuert die Steuerelektronik, bei aktivierter Diebstahlschutzeinrichtung, den mindestens einen Elektromotor zur Erzeugung des entgegenwirkenden Drehmoments erst an, nachdem elektronisch detektiert wurde, dass die Tretlagerwelle um mindestens eine hinterlegte Mindestanzahl an Umdrehungen gedreht wurde oder eine definierte Überwachungszeitdauer verstrichen ist. Gemäß einer zweiten Variante ist die Diebstahlschutzeinrichtung eingerichtet und konfiguriert, einen autorisierten Benutzer elektronisch zu authentifizieren, und ist in Reaktion auf die Authentifizierung des autorisierten Benutzers deaktivierbar, wobei die Steuerelektronik bei aktivierter Diebstahlschutzeinrichtung dann den mindestens einen Elektromotor zur Erzeugung des entgegenwirkenden Drehmoments erst ansteuert, nachdem innerhalb einer vorgegebenen Zeitdauer nach elektronischer Detektion einer Bewegung des Elektrofahrrads kein autorisierter Benutzer authentifiziert wurde, sodass zunächst die vorgegebene Zeitdauer abgewartet wird, ob noch die Authentifizierung des autorisierten Benutzers erfolgt, bevor der mindestens eine Elektromotor zur Erzeugung des entgegenwirkenden Drehmoments angesteuert wird.

Ein derartiges Verfahren kann hierbei selbstverständlich auch über ein Computerprogrammprodukt umsetzbar sein. Ein solches Computerprogrammprodukt enthält dann beispielsweise Anweisungen, die, wenn sie von mindestens einem Prozessor eines Steuergeräts einer Antriebsvorrichtung eines Elektrofahrrads ausgeführt werden, den mindestens einen Prozessor veranlassen, ein entsprechendes Steuerungsverfahren auszuführen.

Ein vorgeschlagenes Verfahren ist hierbei grundsätzlich auch über eine Ausführungsvariante einer vorgeschlagenen Antriebsvorrichtung umsetzbar. Vorstehend und nachstehend erläuterte Vorteile und Merkmale von Ausführungsvarianten einer vorgeschlagenen Antriebsvorrichtung gelten dementsprechend auch für Ausführungsvarianten eines vorgeschlagenen Steuerungsverfahrens und umgekehrt.

Die beigefügten Figuren veranschaulichen exemplarisch mögliche Ausführungsvarianten der vorgeschlagenen Lösung.

Hierbei zeigen:
- Figur 1: eine Ausführungsvariante einer Antriebsvorrichtung unter Veranschaulichung eines Überlagerungsgetriebes, das eine Tretlagerwelle mit einer Abtriebswelle koppelt und dessen Übersetzungsverhältnis über zwei Elektromotoren stufenlos einstellbar ist, in Kombination mit einer elektronischen Diebstahlschutzeinrichtung;
- Figur 2: schematisch ein Elektrofahrrad mit einer Antriebsvorrichtung der Figur 1;
- Figur 3: ein Ablaufdiagramm für eine Ausführungsvariante eines vorgeschlagenen Steuerungsverfahrens bei aktivierter Diebstahlschutzeinrichtung.

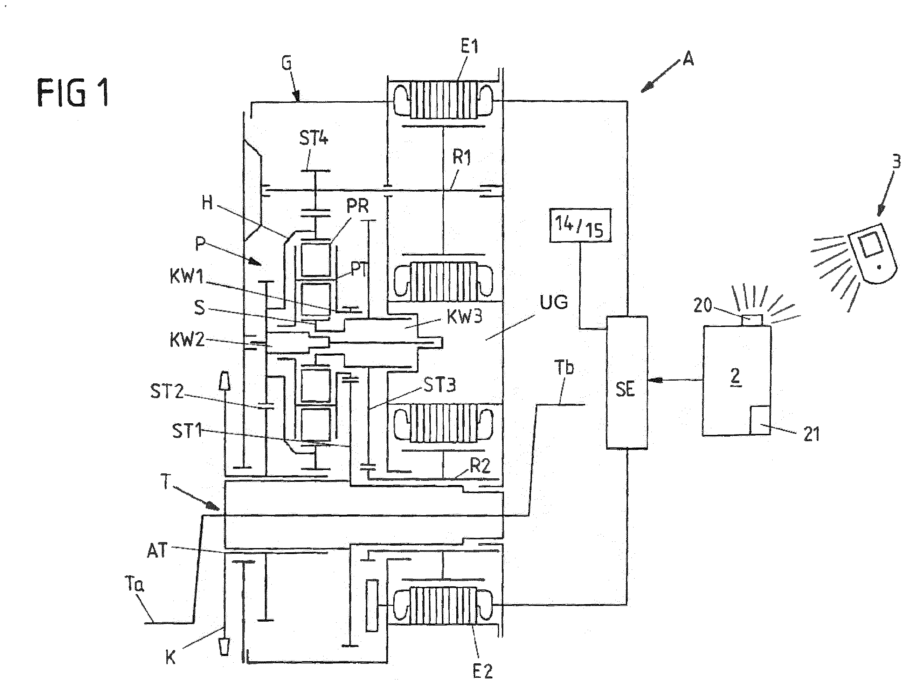

Die Figur 1 zeigt eine Ausführungsvariante einer vorgeschlagenen Antriebsvorrichtung A. Hierbei sind in einem Gehäuse G, das an einem Rahmen eines Elektrofahrrads anzubringen ist, die Komponenten eines Überlagerungsgetriebes UG sowie zwei Elektromotoren E1 und E2 untergebracht. Die Elektromotoren E1 und E2 können hierbei gleichartig, d.h., z.B., mit gleicher Leistung und gleichen Abmessungen, ausgebildet sein. Die Antriebsvorrichtung A umfasst ferner eine mit Pedalen zu verbindende Tretlagerwelle T, an der Pedalhalter Ta und Tb vorgesehen sind. Durch Drehung der Tretlagerwelle T um ihre Längsachse kann ein Fahrer eines Elektrofahrrads, das mit der Antriebsvorrichtung A ausgestattet ist, ein Antriebsdrehmoment einleiten. Die Tretlagerwelle T ragt hierbei durch das Gehäuse G hindurch, sodass die Pedalhalter Ta und Tb an beiden Seiten des Gehäuses G vorstehen.

Über das Überlagerungsgetriebe UG wird eine Drehung der Tretlagerwelle T in eine Drehung einer Abtriebswelle AT übersetzt. Die Abtriebswelle AT ist mit einem wellenseitigen, ersten Koppelteil K drehfest verbunden. Das wellenseitige, erste Koppelteil K weist zum Beispiel ein Kettenrad oder eine Riemenscheibe auf und ist über ein Kraftübertragungsglied, zum Beispiel eine Kette oder einen Riemen, mit einem radseitigen, zweiten Koppelteil, zum Beispiel in Form eines Kettenrades oder einer Riemenscheibe, verbunden, um ein Hinterrad des Elektrofahrrads anzutreiben.

Ein Übersetzungsverhältnis des Übertragungsgetriebes UG ist mithilfe der zwei Elektromotoren E1 und E2 stufenlos einstellbar. Ein erster Elektromotor E1 kann hierbei ein Drehmoment erzeugen, das zumindest teilweise an die Abtriebswelle AT übertragbar ist, um das Elektrofahrrad elektromotorisch unterstützt anzutreiben. Mit den beiden Elektromotoren E1 und E2 ist somit ein stufenloses elektrisches Stellgetriebe gebildet.

Hierbei treiben die Elektromotoren E1 und E2 jeweils eine ihnen zugeordnete Rotorwelle R1 oder R2 an. Die Tretlagerwelle T, die Abtriebswelle AT und die Rotorwellen R1 und R2 sind über das mehrstufige Überlagerungsgetriebe UG miteinander gekoppelt. Hierfür umfasst das Überlagerungsgetriebe UG mehrere Getriebestufen, hier in Form von Stirnradstufen ST1 bis ST4, und eine Planetenradstufe P. Die Planetenradstufe P ist dreiwellig ausgeführt und umfasst neben einem Sonnenrad S einen Planetenradträger PT mit mehreren Planetenrädern PR und ein drehbares Hohlrad H.

Die Tretlagerwelle T, die Abtriebswelle AT und die (zweite) dem zweiten Elektromotor E2 zugeordnete Rotorwelle R2 sind koaxial zueinander angeordnet. Parallel hierzu verläuft die (erste) Rotorwelle R1 des ersten Elektromotors E1. Die Tretlagerwelle T ist über eine erste Stirnradstufe ST1 des Überlagerungsgetriebes UG drehmomentübertragend mit einer ersten Koppelwelle KW1 verbunden. Diese erste Koppelwelle KW1 ist mit dem Planetenradträger PT der Planetenradstufe P verbunden. Die Abtriebswelle AT steht wiederum über eine zweite Stirnradstufe ST2 mit einer zweiten Koppelwelle KW2 in Verbindung, die drehfest mit dem Hohlrad H verbunden ist. Während über die erste Stirnradstufe ST1 die Drehzahl der Tretlagerwelle T auf eine größere Absolutdrehzahl der ersten Koppelwelle KW1 erhöht wird, wird durch die zweite Stirnradstufe ST2 die Drehzahl der zweiten Koppelwelle KW2 in eine geringere Drehzahl der Abtriebswelle AT übersetzt.

Der zweite, abstützende Elektromotor E2 überträgt ein Drehmoment über seine zweite Rotorwelle R2 mithilfe einer dritten Stirnradstufe ST3 an eine das Sonnenrad S lagernde dritte Koppelwelle KW3. Hierbei ist über die dargestellte Übersetzung der dritten Stirnradstufe ST3 eine Übersetzung ins Langsame vorgesehen. Ein seitens des ersten Elektromotors E1 erzeugtes Drehmoment wird über dessen ersten Rotorwelle R1 mithilfe einer vierten Stirnradstufe ST4 wiederum an das Hohlrad H übertragen. Die erste Rotorwelle R1 des ersten Elektromotors E1 ist dementsprechend (über das Hohlrad H) drehmomentübertragend mit der Abtriebswelle AT verbunden. Es ist mithin eine abtriebseitige Leistungsverzweigung bei der dargestellten Antriebsvorrichtung A vorgesehen.

Über den ersten Elektromotor E1 kann bei der dargestellten Konfiguration ein Drehmoment zur Beschleunigung der Abtriebswelle AT und damit zur Beschleunigung des Elektrofahrrads erzeugt werden. Hierbei wird der zweite Elektromotor E2 mithilfe einer Steuerelektronik SE der Antriebsvorrichtung A in Abhängigkeit von der Drehzahl des ersten Elektromotors E1 respektive dessen Rotorwelle R1 angesteuert. Hierdurch ist das Übersetzungsverhältnis des Überlagerungsgetriebes UG variabel einstellbar und ein an der Abtriebswelle AT zur Verfügung gestelltes und an das wellenseitige Koppelteil K übertragenes Abtriebsdrehmoment elektromotorischen variierbar, ohne dass sich hierfür eine Drehgeschwindigkeit der Tretlagerwelle T ändern müsste. Je nach Drehzahl des ersten Elektromotors E1 kann sich hierbei grundsätzlich auch die Drehrichtung der zweiten Rotorwelle R2 ändern.

Bei der Antriebsvorrichtung A der Figur 1 ist zusätzlich eine elektronische Diebstahlschutzeinrichtung 2 vorgesehen, die mit der Steuerelektronik SE für die Ansteuerung der ersten und zweiten Elektromotoren E1 und E2 gekoppelt ist. Bei aktivierter elektronischer Diebstahlschutzeinrichtung 2 ist mindestens einer der Elektromotoren E1 und E2 in einem Betriebszustand betreibbar, in dem ein elektromotorisch erzeugtes Drehmoment einer Drehung der Tretlagerwelle T entgegenwirkt. Bei aktivierter elektronischer Diebstahlschutzeinrichtung 2 kann somit der Antrieb in sich verspannt werden, indem in Reaktion auf eine detektierte Vorwärtsbewegung der Tretlagerwelle T die Abtriebseite der Antriebsvorrichtung A mit einer entgegengesetzten Rotation reagiert und hierfür die Elektromotoren E1, E2 entsprechend angesteuert werden. Über die Antriebsvorrichtung A ist dann das Elektrofahrrad 1 nicht mehr bestimmungsgemäß fahrbar, bis die Diebstahlschutzeinrichtung 2 wieder deaktiviert wird.

Dass die Tretlagerwelle T in eine Vorwärtsdrehrichtung gedreht wird oder dass das die Antriebsvorrichtung A aufweisende Elektrofahrrad 1 bewegt wird, wird beispielsweise über einen Radsensor 14 oder einen Motorsensor 15 elektronisch detektiert. Ein einem Vorderrad oder Hinterrad des Elektrofahrrads 1 zugeordneter Radsensor 14 steht dabei, wie auch ein zum Beispiel die Drehung der Tretlagerwelle T detektierender Motorsensor 15, mit der Steuerelektronik SE in Verbindung, sodass seitens des jeweiligen Sensors 14, 15 erzeugte Signale an die Steuerelektronik SE übertragen werden können.

Eine Aktivierung der Diebstahlschutzeinrichtung 2 erfolgt beispielsweise über ein Bedienteil 21 der Diebstahlschutzeinrichtung 2. Ein solches Bedienteil 21 kann beispielsweise an einem Lenker eines Elektrofahrrads 1 oder an dem Gehäuse G vorgesehen werden und betätigbar sein, die Antriebsvorrichtung A und damit das Elektrofahrrad 1 zu verriegeln.

Für ein Entriegeln der Diebstahlschutzeinrichtung 2 kann die Diebstahlschutzeinrichtung 2 eingerichtet und konfiguriert sein, einen autorisierten Benutzer elektronisch zu authentifizieren. Die Diebstahlschutzeinrichtung 2 ist damit dann erst in Reaktion auf eine erfolgreiche Authentifizierung eines autorisierten Benutzers wieder deaktivierbar. Eine Authentifizierung kann hier beispielsweise durch die Eingabe eines Passwortes an dem Bedienteil 21 erfolgen. Alternativ oder ergänzend kann eine Authentifizierung auf Basis geometrischer Charakteristika eines autorisierten Benutzers erfolgen.

Grundsätzlich kann eine der vorstehend erläuterten Authentifizierung (oder auch eine abweichende elektronische Authentifizierung) an einem Mobilgerät 3 erfolgen, das drahtlos mit der elektronischen Diebstahlschutzeinrichtung 2 koppelbar ist. Die elektronische Diebstahlschutzeinrichtung 2 umfasst hierfür dann beispielsweise einen Signalempfänger 20, um von dem Mobilgerät 3 ein Deaktivierungssignal zu empfangen, sofern an dem Mobilgerät 3 eine erfolgreiche Authentifizierung eines autorisierten Benutzers erfolgt ist. Hat sich ein Benutzer über das Mobilgerät 3 authentifiziert, wird das Deaktivierungssignal an die elektronische Diebstahlschutzeinrichtung 2 gesendet und diese deaktiviert, sodass der Antrieb des Elektrofahrrads 1 wieder vollumfänglich nutzbar ist.

Auf dem Mobilgerät 3 kann beispielsweise eine Softwareapplikation installiert sein, die - durch entsprechende Parametrisierung und/oder Verschlüsselung - der Diebstahlschutzeinrichtung 2 zugeordnet ist und bei einer Initialisierung Authentifizierungsparameter abfragt, die seitens eines autorisierten Benutzers einzugeben respektive zu erfüllen sind, bevor die aktivierte Diebstahlschutzeinrichtung 2 wieder deaktiviert werden kann. Beispielsweise kann bei der Initialisierung ein Passwort einzugeben sein oder ein Abfrage nach biometrischen Daten erfolgen, um zum Beispiel an einem Fingerabdruckleser des Mobilgeräts mindestens einen Fingerabdruck einzulesen und/oder über eine Kamera des Mobilgeräts eine Gesichtserkennung durchzuführen.

Alternativ oder ergänzend kann die Diebstahlschutzeinrichtung 2 auch einen Sender zum Datenversand umfassen. Hierbei kann die Diebstahlschutzeinrichtung 2 beispielsweise an ein Mobilgerät 3 signalisieren, dass eine Deaktivierung der Diebstahlschutzeinrichtung 2 erfolgt ist. Ferner können Standortinformationen an das Mobilgerät 3 übertragen werden, um über den aktuellen Standort der Antriebsvorrichtung A und damit des hiermit ausgestatteten Elektrofahrrads zu informieren.

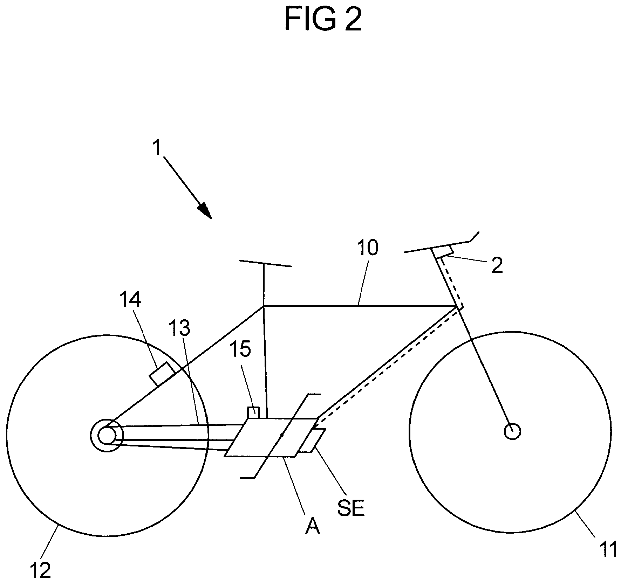

In der Figur 2 ist ein Elektrofahrrad 1 mit der Antriebsvorrichtung A der Figur 1 veranschaulicht. Das Elektrofahrrad 1 weist einen Rahmen 10 auf, an dem die Antriebsvorrichtung A mit ihrer Steuerelektronik SE und dem Motorsensor 15 befestigt ist. Über einen Riemen oder eine Kette 13 steht die Antriebsvorrichtung A mit einem Hinterrad 12 des Elektrofahrrads 1 in Verbindung, um das Elektrofahrrad 1 antreiben zu können. Diesem Hinterrad 12 ist hier exemplarisch auch der Radsensor 14 zugeordnet. Selbstverständlich könnte aber der Radsensor 14 oder ein zusätzlicher Radsensor 14 auch an einem Vorderrad 11 des Elektrofahrrads 1 vorgesehen sein.

Die elektronische Diebstahlschutzeinrichtung 2 ist vorliegend im Bereich eines Lenkers des Elektrofahrrads 2 vorgesehen und über eine Signalleitung mit der Steuerelektronik SE gekoppelt. Alternativ kann beispielsweise aber auch lediglich das Bedienteil 21 der Diebstahlschutzeinrichtung 2 im Bereich des Lenkers vorgesehen sein oder die Diebstahlschutzeinrichtung 2 ist vollständig an oder dem Gehäuse G der Antriebsvorrichtung A angeordnet.

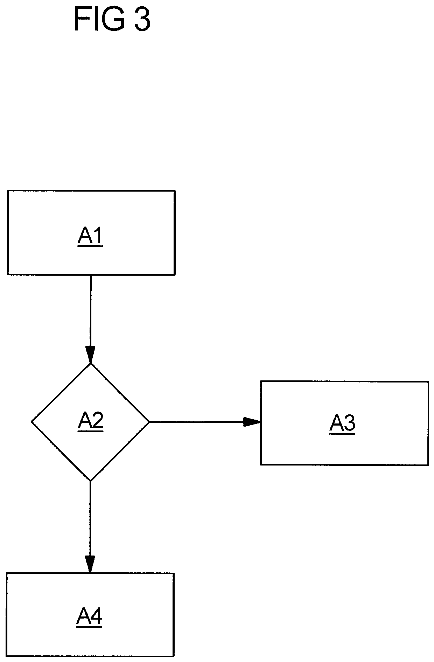

Ein Ablaufdiagramm der Figur 3 veranschaulicht eine mögliche Ausführungsvariante eines vorgeschlagenen Steuerungsverfahrens, um bei aktivierter elektronischer Diebstahlschutzeinrichtung 2 über die Signalisierung an die Steuerelektronik SE zu entscheiden, inwieweit der Antrieb des Elektrofahrrads untauglich zu schalten ist.

Hierbei wird in einem ersten Verfahrensschritt A1 die Diebstahlschutzeinrichtung 2 zunächst aktiviert und die Elektromotoren E1 und E2 befinden sich im Stand-by. Wird nun in einem Verfahrensschritt A2 eine Bewegung des Elektrofahrrads 1 detektiert und hierbei festgestellt, dass die Tretlagerwelle T in eine Vorwärtsdrehrichtung gedreht wird, erfolgt über die Diebstahlschutzeinrichtung 2 und die Steuerelektronik SE eine Ansteuerung der Elektromotoren E1 und E2 derart, dass elektromotorisch ein Drehmoment erzeugt wird, das der Drehung der Tretlagerwelle T entgegenwirkt.

Der Erzeugung des entgegenwirkenden Drehmoments kann beispielsweise noch vorangehen, dass zunächst eine definierte Zeitdauer abgewartet wird, ob noch eine Authentifizierung eines autorisierten Benutzers erfolgt, und/oder geprüft wird, ob die Drehung der Tretlagerwelle T mit einer einen Schwellwert übersteigenden Drehgeschwindigkeit erfolgt. Die Erzeugung des entgegenwirkenden Drehmoments über die elektronische Diebstahlschutzeinrichtung 2 erfolgt somit dann zum Beispiel erst nach Erfüllen mindestens eines weiteren Kriteriums.

Wird beispielsweise innerhalb eines vordefinierten Zeitfensters nach der Detektion einer Drehung der Tretlagerwelle T ein autorisierter Benutzer erfolgreich authentifiziert, erfolgt in einem Verfahrensschritt A3 eine Deaktivierung der elektronischen Diebstahlschutzeinrichtung 2. Andernfalls wird in einem Verfahrensschritt A4 das entgegenwirkende Drehmoment elektromotorisch erzeugt und die Diebstahlschutzeinrichtung 2 bleibt weiterhin aktiviert.

### Bezugszeichenliste

- 1: Elektrofahrrad
- 10: Rahmen
- 11: Vorderrad
- 12: Hinterrad
- 13: Kette / Riemen (Kraftübertragungsglied)
- 14: Radsensor
- 15: Motorsensor
- 2: Diebstahlschutzeinrichtung
- 20: Signalempfänger
- 21: Bedienteil
- 3: Mobilgerät
- A: Antriebsvorrichtung
- AT: Abtriebswelle
- E1: 1. Elektromotor
- E2: 2. Elektromotor
- G: Gehäuse
- H: Hohlrad
- K: Koppelteil
- KW1-KW3: Koppelwelle
- P: Planetenradstufe
- PR: Planetenrad
- PT: Planetenradträger
- R1, R2: Rotorwelle
- S: Sonnenrad
- SE: Steuerelektronik
- ST1-ST4: Stirnradstufe
- T: Tretlagerwelle
- Ta, Tb: Pedalhalter
- UG: Überlagerungsgetriebe

## Patentansprüche

1. Antriebsvorrichtung für ein Elektrofahrrad (1), mit
- einer Tretlagerwelle (T),
- einer Abtriebswelle (AT) zum Antreiben eines Rades (12) des Elektrofahrrads (1), und
- einem Überlagerungsgetriebe (UG), dessen Übersetzungsverhältnis mithilfe zweier Elektromotoren (E1, E2) stufenlos einstellbar ist und über das die Tretlagerwelle (T) und die Abtriebswelle (AT) miteinander gekoppelt sind,
wobei ein von einem ersten Elektromotor (E1) der zwei Elektromotoren (E1, E2) erzeugtes Drehmoment zumindest teilweise an die Abtriebswelle (AT) übertragbar ist,
**dadurch gekennzeichnet, dass**
die Antriebsvorrichtung (A) eine elektronische Diebstahlschutzeinrichtung (2) umfasst, über die mindestens einer der Elektromotoren (E1, E2) in einem Betriebszustand betreibbar ist, in dem ein elektromotorisch erzeugtes Drehmoment einer Drehung der Tretlagerwelle (T) in eine Vorwärtsdrehrichtung entgegenwirkt, wobei die Antriebsvorrichtung (A) eine Steuerelektronik (SE) umfasst, die konfiguriert ist, bei aktivierter Diebstahlschutzeinrichtung (2) in Reaktion auf eine elektronisch erfasste Drehung der Tretlagerwelle (T) in die Vorwärtsdrehrichtung den mindestens einen Elektromotor (E1, E2) zur Erzeugung des entgegenwirkenden Drehmoments anzusteuern, wobei
- die Steuerelektronik (SE) konfiguriert ist, bei aktivierter Diebstahlschutzeinrichtung (2) den mindestens einen Elektromotor (E1, E2) zur Erzeugung des entgegenwirkenden Drehmoments erst anzusteuern, nachdem elektronisch detektiert wurde, dass die Tretlagerwelle (T) um mindestens eine hinterlegte Mindestanzahl an Umdrehungen gedreht wurde oder eine definierte Überwachungszeitdauer verstrichen ist, und/oder
- die Diebstahlschutzeinrichtung (2) eingerichtet und konfiguriert ist, einen autorisierten Benutzer elektronisch zu authentifizieren, und in Reaktion auf die Authentifizierung des autorisierten Benutzers deaktivierbar ist, wobei die Steuerelektronik (SE) konfiguriert ist, bei aktivierter Diebstahlschutzeinrichtung (2) den mindestens einen Elektromotor (E1, E2) zur Erzeugung des entgegenwirkenden Drehmoments erst anzusteuern, nachdem innerhalb einer vorgegebenen Zeitdauer nach elektronischer Detektion einer Bewegung des Elektrofahrrads (1) kein autorisierter Benutzer authentifiziert wurde, sodass zunächst die vorgegebene Zeitdauer abgewartet wird, ob noch die Authentifizierung des autorisierten Benutzers erfolgt, bevor der mindestens eine Elektromotor (E1, E2) zur Erzeugung des entgegenwirkenden Drehmoments angesteuert wird.

2. Antriebsvorrichtung nach Anspruch 1, **dadurch gekennzeichnet, dass** die Diebstahlschutzeinrichtung (2), die eingerichtet und konfiguriert ist, den autorisierten Benutzer elektronisch zu authentifizieren, zur elektronischen Authentifizierung des autorisierten Benutzers ein an dem Elektrofahrrad (1) vorzusehendes Bedienteil (21) aufweist, über das sich der Benutzer gegenüber der Diebstahlschutzeinrichtung (2) authentifizieren kann.

3. Antriebsvorrichtung nach Anspruch 1 oder 2, **dadurch gekennzeichnet, dass** die Diebstahlschutzeinrichtung (2), die eingerichtet und konfiguriert ist, den autorisierten Benutzer elektronisch zu authentifizieren, ein mobiles Sendegerät umfasst oder mit einem mobilen Sendegerät, insbesondere einem Mobilgerät (3) koppelbar ist, an dem sich der autorisierte Benutzer authentifizieren kann und das konfiguriert ist, kabellos ein Deaktivierungssignal an die Diebstahlschutzeinrichtung (2) senden zu können.

4. Antriebsvorrichtung nach einem der Ansprüche 1 bis 3, **dadurch gekennzeichnet, dass** die Diebstahlschutzeinrichtung (2), die eingerichtet und konfiguriert ist, den autorisierten Benutzer elektronisch zu authentifizieren, mit einem Zeitgeber ausgestattet ist, der nach elektronischer Detektion der Bewegung des Elektrofahrrads (1) automatisch gestartet wird.

5. Antriebsvorrichtung nach Anspruch 1, **dadurch gekennzeichnet, dass** die Steuerelektronik (SE) konfiguriert ist, bei aktivierter Diebstahlschutzeinrichtung (2) den mindestens einen Elektromotor (E1, E2) zur Erzeugung des entgegenwirkenden Drehmoments erst anzusteuern, nachdem elektronisch detektiert wurde, dass einerseits die Tretlagerwelle (T) um die mindestens eine hinterlegte Mindestanzahl an Umdrehungen gedreht wurde oder die definierte Überwachungszeitdauer verstrichen ist und andererseits innerhalb der vorgegebenen Zeitdauer nach elektronischer Detektion der Bewegung des Elektrofahrrads kein autorisierter Benutzer authentifiziert wurde.

6. Elektrofahrrad mit einer Antriebsvorrichtung (A) nach einem der vorhergehenden Ansprüche.

7. Verfahren zur Steuerung einer Antriebsvorrichtung (A) eines Elektrofahrrads (1), bei der
- eine Tretlagerwelle (T) und eine mit einem Rad (12) des Elektrofahrrads (1) gekoppelte Abtriebswelle (AT) über ein Überlagerungsgetriebe (UG) miteinander gekoppelt sind,
- ein Übersetzungsverhältnis des Überlagerungsgetriebes (UG) mithilfe zweier Elektromotoren (E1, E2) der Antriebsvorrichtung (A) stufenlos einstellbar ist und
- ein von einem ersten Elektromotor (E1) der zwei Elektromotoren (E1, E2) erzeugtes Drehmoment zumindest teilweise an die Abtriebswelle (AT) übertragbar ist,
**dadurch gekennzeichnet, dass**
über eine elektronische Diebstahlschutzeinrichtung (2) mindestens einer der Elektromotoren (E1, E2) in einem Betriebszustand betrieben wird, in dem ein elektromotorisch erzeugtes Drehmoment einer Drehung der Tretlagerwelle (T) in eine Vorwärtsdrehrichtung entgegenwirkt, wenn die elektronische Diebstahlschutzeinrichtung (2) aktiviert ist, wobei die Antriebsvorrichtung (A) eine Steuerelektronik (SE) umfasst, die, bei aktivierter Diebstahlschutzeinrichtung (2), in Reaktion auf eine elektronisch erfasste Drehung der Tretlagerwelle (T) in die Vorwärtsdrehrichtung den mindestens einen Elektromotor (E1, E2) zur Erzeugung des entgegenwirkenden Drehmoments ansteuert, wobei
- die Steuerelektronik (SE), bei aktivierter Diebstahlschutzeinrichtung (2), den mindestens einen Elektromotor (E1, E2) zur Erzeugung des entgegenwirkenden Drehmoments erst ansteuert, nachdem elektronisch detektiert wurde, dass die Tretlagerwelle (T) um mindestens eine hinterlegte Mindestanzahl an Umdrehungen gedreht wurde oder eine definierte Überwachungszeitdauer verstrichen ist, und/oder
- die Diebstahlschutzeinrichtung (2) eingerichtet und konfiguriert ist, einen autorisierten Benutzer elektronisch zu authentifizieren, und in Reaktion auf die Authentifizierung des autorisierten Benutzers deaktivierbar ist, wobei die Steuerelektronik (SE) bei aktivierter Diebstahlschutzeinrichtung (2) den mindestens einen Elektromotor (E1, E2) zur Erzeugung des entgegenwirkenden Drehmoments erst ansteuert, nachdem innerhalb einer vorgegebenen Zeitdauer nach elektronischer Detektion einer Bewegung des Elektrofahrrads (1) kein autorisierter Benutzer authentifiziert wurde, sodass zunächst die vorgegebene Zeitdauer abgewartet wird, ob noch die Authentifizierung des autorisierten Benutzers erfolgt, bevor der mindestens eine Elektromotor (E1, E2) zur Erzeugung des entgegenwirkenden Drehmoments angesteuert wird.

8. Verfahren nach Anspruch 7, **dadurch gekennzeichnet, dass** die Diebstahlschutzeinrichtung (2), die eingerichtet und konfiguriert ist, den autorisierten Benutzer elektronisch zu authentifizieren, mit einem Zeitgeber ausgestattet ist, der eingerichtet ist, nach elektronischer Detektion der Bewegung des Elektrofahrrads (1) automatisch gestartet zu werden.

## Claims

1. A driving device for an electric bicycle (1), comprising
- a bottom bracket shaft (T),
- an output shaft (AT) for driving a wheel (12) of the electric bicycle (1), and
- a superposition transmission (UG) whose gear ratio is steplessly adjustable by means of two electric motors (E1, E2) and via which the bottom bracket shaft (T) and the output shaft (AT) are coupled with each other,
wherein a torque generated by a first electric motor (E1) of the two electric motors (E1, E2) can at least partly be transmitted to the output shaft (AT),
**characterized in that**
the driving device (A) comprises an electronic anti-theft device (2) via which at least one of the electric motors (E1, E2) is operable in an operating condition in which an electromotively generated torque counteracts a rotation of the bottom bracket shaft (T) in a forward direction of rotation, wherein the driving device (A) comprises an electronic control unit (SE) which is configured to actuate at least one of the electric motors (E1, E2) for generating the counteracting torque, when the anti-theft device (2) is activated, in response to an electronically detected rotation of the bottom bracket shaft (T) in the forward direction of rotation, wherein
- the electronic control unit (SE) is configured to actuate the at least one electric motor (E1, E2) for generating the counteracting torque, when the anti-theft device (2) is activated, only after it has been electronically detected that the bottom bracket shaft (T) has been rotated by at least a stored minimum number of revolutions, or a defined monitoring period has elapsed, and/or
- the anti-theft device (2) is equipped and configured to electronically authenticate an authorized user and can be deactivated in response to the authentication of an authorized user, wherein the electronic control unit (SE) is configured to actuate the at least one electric motor (E1, E2) for generating the counteracting torque, when the anti-theft device (2) is activated, only after an authorized user has not been authenticated within a specified period after the electronic detection of a movement of the electric bicycle (1), such that first the specified period is awaited to check whether the authentication of the authorized user still is effected, before the at least one electric motor (E1, E2) for generating of the counteracting torque is actuated.

2. The driving device according to claim 1, **characterized in that** for electronically authenticating an authorized user the anti-theft device (2), which is equipped and configured to electronically authenticate an authorized user, includes an operating part (21) to be provided on the electric bicycle (1), via which a user can authenticate himself to the anti-theft device (2).

3. The driving device according to claim 1 or 2, **characterized in that** the anti-theft device (2), which is equipped and configured to electronically authenticate an authorized user, comprises a mobile transmitting device or can be coupled with a mobile transmitting device, in particular a mobile device (3) on which an authorized user can authenticate himself or which is configured to be able to wirelessly send a deactivation signal to the anti-theft device (2).

4. The driving device according to claim 1 to 3, **characterized in that** the anti-theft device (2), which is equipped and configured to electronically authenticate the authorized user, comprises a timing element which after an electronic detection of the movement of the electric bicycle is started automatically.

5. The driving device according to claim 1, **characterized in that** the electronic control unit (SE) is configured to actuate the at least one electric motor (E1, E2) for generating the counteracting torque, when the anti-theft device (2) is activated, only after it has been electronically detected that on the one hand the bottom bracket shaft (T) has been rotated by the at least one stored minimum number of revolutions, or the defined monitoring period has elapsed, and on the other hand an authorized user has not been authenticated within the specified period after an electronic detection of the movement of the electric bicycle.

6. An electric bicycle with a driving device (A) according to any of the preceding claims.

7. A method for controlling a driving device (A) of an electric bicycle (1), in which
- a bottom bracket shaft (T) and an output shaft (AT) coupled with a wheel (12) of the electric bicycle (1) are coupled with each other via a superposition transmission (UG),
- a gear ratio of the superposition transmission (UG) is steplessly adjustable by means of two electric motors (E1, E2) of the driving device (A), and
- a torque generated by a first electric motor (E1) of the two electric motors (E1, E2) can at least partly be transmitted to the output shaft (AT),
**characterized in that**
via an electronic anti-theft device (2) at least one of the electric motors (E1, E2) is operated in an operating condition in which an electromotively generated torque counteracts a rotation of the bottom bracket shaft (T) in a forward direction of rotation when the electronic anti-theft device (2) is activated, wherein the driving device (A) comprises an electronic control unit (SE) which actuates at least one of the electric motors (E1, E2) for generating the counteracting torque, when the anti-theft device (2) is activated, in response to an electronically detected rotation of the bottom bracket shaft (T) in the forward direction of rotation, wherein
- the electronic control unit (SE) actuates the at least one electric motor (E1, E2) for generating the counteracting torque, when the anti-theft device (2) is activated, only after it has been electronically detected that the bottom bracket shaft (T) has been rotated by at least a stored minimum number of revolutions, or a defined monitoring period has elapsed, and/or
- the anti-theft device (2) is equipped and configured to electronically authenticate an authorized user and can be deactivated in response to the authentication of an authorized user, wherein the electronic control unit (SE) is configured to actuate the at least one electric motor (E1, E2) for generating the counteracting torque, when the anti-theft device (2) is activated, only after an authorized user has not been authenticated within a specified period after the electronic detection of a movement of the electric bicycle (1), such that first the specified period is awaited to check whether the authentication of the authorized user still is effected, before the at least one electric motor (E1, E2) for generating of the counteracting torque is actuated.

8. The method according to claim 1 to 3, **characterized in that** the anti-theft device (2), which is equipped and configured to electronically authenticate the authorized user, comprises a timing element which after an electronic detection of the movement of the electric bicycle is started automatically.

## Revendications

1. Dispositif d'entraînement pour une bicyclette électrique (1) avec
- un axe de pédalier (T),
- un arbre de sortie (AT) pour l'entraînement d'une roue (12) de la bicyclette électrique (1), et
- un engrenage à superposition (UG), dont le rapport de transmission est réglable en continu à l'aide de deux moteurs électriques (E1, E2) et par le biais duquel l'axe de pédalier (T) et l'arbre de sortie (AT) sont couplés l'un à l'autre,
dans lequel un couple généré par un premier moteur électrique (E1) des deux moteurs électriques (E1, E2) peut être transmis au moins partiellement à l'arbre de sortie (AT),
**caractérisé en ce que**
le dispositif d'entraînement (A) comporte un dispositif de protection contre le vol électronique (2), par le biais duquel au moins un des moteurs électriques (E1, E2) peut fonctionner dans un état de fonctionnement, dans lequel un couple généré de manière électromotorisée agit contre une rotation de l'axe de pédalier (T) dans un sens de rotation vers l'avant, dans lequel le dispositif d'entraînement (A) comporte une électronique de commande (SE) qui est configurée afin de commander, en cas de dispositif de protection contre le vol (2) activé, en réaction à une rotation détectée de manière électronique de l'axe de pédalier (T) dans le sens de rotation vers l'avant, l'au moins un moteur électrique (E1, E2) pour la génération du couple opposé, dans lequel
- l'électronique de commande (SE) est configurée afin de commander en cas de dispositif de protection contre le vol (2) activé, l'au moins un moteur électrique (E1, E2) pour la génération du couple opposé seulement après qu'il a été détecté de manière électronique que l'axe de pédalier (T) a été tourné d'au moins un nombre minimum enregistré de rotations ou une durée de surveillance définie est écoulée, et/ou
- le dispositif de protection contre le vol (2) est conçu et configuré afin d'authentifier de manière électronique un utilisateur autorisé, et peut être désactivé en réaction à l'authentification de l'utilisateur autorisé, dans lequel l'électronique de commande (SE) est configurée afin de commander en cas de dispositif de protection contre le vol (2) activé, l'au moins un moteur électrique (E1, E2) pour la génération du couple opposé seulement après qu'aucun utilisateur autorisé n'a été authentifié dans une durée prédéfinie après la détection électronique d'un mouvement de la bicyclette électrique (1) de sorte que la durée prédéfinie soit tout d'abord attendue si l'authentification de l'utilisateur autorisé est encore effectuée avant que l'au moins un moteur électrique (E1, E2) ne soit commandé pour la génération du couple opposé.

2. Dispositif d'entraînement selon la revendication 1, **caractérisé en ce que** le dispositif de protection contre le vol (2) qui est conçu et configuré afin d'authentifier de manière électronique l'utilisateur autorisé, pour l'authentification électronique de l'utilisateur autorisé présente un élément de commande (21) à prévoir au niveau de la bicyclette électrique (1), par le biais duquel l'utilisateur peut s'authentifier par rapport au dispositif de protection contre le vol (2).

3. Dispositif d'entraînement selon la revendication 1 ou 2, **caractérisé en ce que** le dispositif de protection contre le vol (2) qui est conçu et configuré afin d'authentifier de manière électronique l'utilisateur autorisé, comporte un appareil d'émission mobile ou peut être couplé à un appareil d'émission mobile, en particulier un appareil mobile (3), sur lequel l'utilisateur autorisé peut s'authentifier et qui est configuré afin de pouvoir envoyer sans câble un signal de désactivation au dispositif de protection contre le vol (2).

4. Dispositif d'entraînement selon l'une quelconque des revendications 1 à 3, **caractérisé en ce que** le dispositif de protection contre le vol (2) qui est conçu et configuré afin d'authentifier de manière électronique l'utilisateur autorisé, est équipé d'un minuteur qui est démarré de manière automatique après la détection électronique du mouvement de la bicyclette électrique (1).

5. Dispositif d'entraînement selon la revendication 1, **caractérisé en ce que** l'électronique de commande (SE) est configurée afin de commander en cas de dispositif de protection contre le vol (2) activé, l'au moins un moteur électrique (E1, E2) pour la génération du couple opposé seulement après qu'il a été détecté de manière électronique que d'une part l'axe de pédalier (T) a été tourné de l'au moins un nombre minimal enregistré de rotations ou la durée de surveillance définie est écoulée et d'autre part aucun utilisateur autorisé n'a été authentifié dans la durée prédéfinie après la détection électronique du mouvement de la bicyclette électrique.

6. Bicyclette électrique avec un dispositif d'entraînement (A) selon l'une quelconque des revendications précédentes.

7. Procédé de commande d'un dispositif d'entraînement (A) d'une bicyclette électrique (1), pour lequel
- un axe de pédalier (T) et un arbre de sortie (AT) couplé à une roue (12) de la bicyclette électrique (1) sont couplés l'un à l'autre par le biais d'un engrenage à superposition (UG),
- un rapport de transmission de l'engrenage à superposition (UG) est réglable en continu à l'aide de deux moteurs électriques (E1, E2) du dispositif d'entraînement (A) et
- un couple généré par un premier moteur électrique (E1) des deux moteurs électriques (E1, E2) peut être transmis au moins partiellement à l'arbre de sortie (AT),
**caractérisé en ce que**
par le biais d'un dispositif de protection contre le vol (2) électronique, au moins un des moteurs électriques (E1, E2) fonctionne dans un état de fonctionnement, dans lequel un couple généré de manière électromotorisée agit contre une rotation de l'axe de pédalier (T) dans un sens de rotation vers l'avant lorsque le dispositif de protection contre le vol (2) électronique est activé, dans lequel le dispositif d'entraînement (A) comporte une électronique de commande (SE) qui, en cas de dispositif de protection contre le vol (2) activé, en réaction à une rotation détectée de manière électronique de l'axe de pédalier (T) dans le sens de rotation vers l'avant, commande l'au moins un moteur électrique (E1, E2) pour la génération du couple opposé, dans lequel
- l'électronique de commande (SE) commande, en cas de dispositif de protection contre le vol (2) activé, l'au moins un moteur électrique (E1, E2) pour la génération du couple opposé seulement après qu'il a été détecté de manière électronique que l'axe de pédalier (T) a été tourné d'au moins un nombre minimal enregistré de rotations ou une durée de surveillance définie est écoulée, et/ou
- le dispositif de protection contre le vol (2) est conçu et configuré afin d'authentifier de manière électronique un utilisateur autorisé, et en réaction à l'authentification de l'utilisateur autorisé peut être désactivé, dans lequel l'électronique de commande (SE) commande en cas de dispositif de protection contre le vol (2) activé, l'au moins un moteur électrique (E1, E2) pour la génération du couple opposé seulement après qu'aucun utilisateur autorisé n'a été authentifié dans une durée prédéfinie après la détection électronique d'un mouvement de la bicyclette électrique (1) de sorte que la durée prédéfinie soit tout d'abord attendue si l'authentification de l'utilisateur autorisé est encore effectuée avant que l'au moins un moteur électrique (E1, E2) ne soit commandé pour la génération du couple opposé.

8. Procédé selon la revendication 7, **caractérisé en ce que** le dispositif de protection contre le vol (2) qui est conçu et configuré afin d'authentifier de manière électronique l'utilisateur autorisé, est équipé d'un minuteur qui est conçu afin d'être démarré de manière automatique après la détection électronique du mouvement de la bicyclette électrique (1).
